# EUROPÄISCHE PATENTSCHRIFT

(11) **EP 1 114 784 B1**
(45) Veröffentlichungstag und Bekanntmachung des Hinweises auf die Patenterteilung: **30.10.2002**
(21) Anmeldenummer: 00810002.6
(22) Anmeldetag: 04.01.2000
(51) Int. Cl.: B65G 47/08, B65G 47/66, B65B 35/44

(54) **Vorrichtung zur Bildung von Produktegruppen**
Device for forming groups of products
Dispositif pour former des groupes de produits

(43) Veröffentlichungstag der Anmeldung: 11.07.2001
(73) Patentinhaber: Texa AG, 7023 Haldenstein (CH)
(72) Erfinder: Benz, Gottlieb, 8890 Flums (CH)
(74) Vertreter: Patentanwälte Feldmann & Partner AG

(56) Entgegenhaltungen:
- FR-A- 2 391 126
- US-A- 2 971 305
- US-A- 5 060 454
- US-A- 5 339 606
- US-A- 5 704 195

## Beschreibung

Die vorliegende Erfindung betrifft eine Vorrichtung zur Übernahme von länglichen, mindestens annähernd zylindrischen Produkteeinheiten, vorzugsweise Tuben, Hülsen oder Dosen, die kontinuierlich von einer Produktionslinie kommen und zur Bildung von Produktegruppen mit einer vorwählbaren Einheiten-Anzahl, eine kontinuierlich anliefernde Fördereinheit und ein die Produktegruppen aufnehmendes und in eine Abschiebeposition förderndes Transportband mit Produktionsaufnahmen umfassend, wobei die Fördereinheit und das Transportband eine gemeinsame Übergabestrecke aufweisen, in der sie distanziert parallel zueinander verlaufen.

Vorrichtungen mittels der zylindrische Produkteeinheiten, die von Produktionslinien kommen, in Produktegruppen mit vorwählbaren Einheitenanzahl weitergefördert werden, sind in verschiedenen Ausführungen bekannt. Es handelt sich hierbei vorzugsweise um Produkteeinheiten, wie Tuben, Hülsen oder Dosen, die von einer Produktionslinie kommen und in relativ grossen Einheiten zu Abfüllbetrieben weitergefördert werden sollen. Die dichtestmögliche Packung zylindrischer Produkteeinheiten ist die Stapelung zu im wesentlichen sechseckigen Gebilden, die dann umreift weiter transportiert werden. Während von der Produktionslinie her die Produkteeinheiten kontinuierlich angeliefert werden, muss zur Gruppenbildung eine diskontinuierliche Weiterförderung stattfinden. Vorrichtungen, die diese Aufgabe erfüllen, sind aus dem Stand der Technik in verschiedenster Ausführungsform bekannt.

Aus der FR-A-2391126 ist eine Vorrichtung bekannt, um zylindrische Produkteeinheiten, die kontinuierlich von einer Produktionslinie kommen, zu gruppieren und gruppenweise zu einer Abgabeposition zu fördern.
Hierbei werden zwei Förder- und Gruppiereinheiten, die hintereinander herlaufend arbeiten können, so gesteuert, dass die eine Förder- und Gruppiereinheit beschickt wird, während die andere zur Abgabestation fährt und dort entleert wird. Die entleerte Station kann nun wieder zur Beschickungsstation gefahren werden, während die beschickte Station wieder zur Entleerungsstation fährt. Während der Zeit, in welcher keine Produkteeinheiten in die Förder- und Gruppiereinheit gefüllt werden können, werden diese durch eine Schleusenklappe zurückgehalten.

In ähnlicher Weise arbeitet eine Vorrichtung gemäss dem US-A-5339606. Auch hier wird mit zwei voneinander unabhängig gesteuerten Förder- und Gruppiereinheiten gearbeitet, wobei jedoch eine Fördervorrichtung zwischen der Produktionslinie und der Vorrichtung zur Gruppierung der Produktionseinheiten angeordnet ist. Die Vorrichtung, die dem Oberbegriff des Patentanspruches 1 entspricht, weist zudem eine gemeinsame Übergabestrecke auf, in der die Fördereinheit und das Transportband distanziert parallel zueinander verlaufen. Entgegen der zuvor beschriebenen Vorrichtung erfolgt die Übergabe auf die Förder- und Gruppiereinheit kontinuierlich und immer am selben Ort.

Während die Vorrichtung gemäss der FR-A-2391126 nur an Anlagen angebaut werden kann, welche mit einer relativ niederen Taktzeit beziehungsweise Produktivität arbeiten, erlaubt die Lösung gemäss der US-A-5339606 eine sehr hohe Taktzeit. Hier ist jedoch der Aufwand zur Umrüstung der Vorrichtung bei Wechsel der Durchmesser der Produkteeinheiten äusserst aufwendig, und die Steuerung der Vorrichtung ist komplex und bedingt ebenfalls Anpassungen, wenn auf andere Dimensionen der Produkteeinheiten gewechselt wird. Hinzu kommt, dass die gesamte Anlage relativ teuer ist.

Dies trifft in noch vermehrter Form bei der Ausführung gemäss der US-A-5704195 zu. Bei der hier gezeigten Anlage wird mit Saugern gearbeitet, die beliebig aktiviert werden können.

Entsprechend lassen sich äusserst einfach Produktegruppen unterschiedlicher Anzahl von Produkteeinheiten entnehmen. Zudem lassen sich die Sauger in einem Greifer unterbringen, in dem die Greifer dem Durchmesser der Produkteeinheiten angepasst in beliebigem Abstand zueinander angeordnet sein können. Diese können auf einen harmonikaartig arbeitenden Ablegetisch auf die Durchmesserdistanz zusammengerückt werden und dann in die entsprechende Form hinübergeschoben werden. Diese mit Druckluft arbeitende Vorrichtung ist insbesondere für Produktionslinien geeignet, auf den mit relativ kleiner Leistung gearbeitet wird, jedoch die Umstellung der Produktionslinie auf unterschiedliche Produkteeinheiten relativ häufig erfolgt. Da praktisch keine Umrüstung erforderlich ist, macht sich in solchen Fällen die Vorrichtung trotz der kostenaufwendigen Gestaltung bezahlt. Für Vorrichtungen der eingangs genannten Art, bei der die Produktionslinie nicht häufig umgestellt wird, macht sich jedoch eine solche Anlage nicht bezahlt.

Es ist folglich die Aufgabe der vorliegenden Erfindung, eine vereinfachte Vorrichtung gemäss Oberbegriff des Patentanspruches 1 zu schaffen, die besonders preiswert realisiert werden kann. Zudem soll der Umrüstaufwand relativ gering bleiben.

Diese Aufgabe löst eine Vorrichtung gemäss Oberbegriff des Patentanspruches 1, bei der im Bereich der Übergabestrecke eine grössenvariable Ablagefläche zwischen der Fördereinheit und dem Transportband angeordnet ist, die nach Massgabe der zu bildenden Produktegruppen bewegbar ist.

Besonders einfach lässt sich die grössenvariable Ablagefläche realisieren durch einen flexiblen Bandabschnitt, der unter Spannung gehalten wird. Weitere bevorzugte Ausführungsformen der erfindungsgemässen Vorrichtung gehen aus den abhängigen Ansprüchen 3 - 9 hervor und sind anhand der nachfolgenden Beschreibung erläutert.

In der Zeichnung ist schematisch ein Ausführungsbeispiel der erfindungsgemässen Vorrichtung sowie deren Wirkungsweise dargestellt und anhand der nachfolgenden Beschreibung erläutert. Es zeigt:
- Figur 1: die gesamte Vorrichtung zur Übernahme von zylindrischen Produkteeinheiten und zur Bildung von Produktegruppen in schematischer Darstellung und
- Figur 2-7: einen Ausschnitt der Vorrichtung nach Figur 1 in verkleinertem Massstab während verschiedenen Verfahrensschritten.

In der Figur erkennt man am rechten Bildrand die mittels einem Band von der Produktionslinie 2 kommenden Produkteeinheiten 1. Bei den hier interessierenden Produkteinheiten handelt es sich um zylindrische Körper wie beispielsweise Tuben, Hülsen oder Dosen, die von hochproduktiven Herstellungsanlagen kontinuierlich angeliefert werden. Am Ende der Produktionslinie 2 werden die Produkteinheiten 1 an eine Fördereinheit abgegeben, die gesamthaft mit 3 bezeichnet ist. Diese Fördereinheit 3 umfasst umlaufende Transportketten 5 und daran schwenkbeweglich gelagerte Fördergondeln 4. Die Fördergondeln 4 sind so ausgelegt, dass sie alle vorkommenden Grössen von Produkteinheiten aufzunehmen vermögen. Die Fördergondeln 4 müssen somit nicht in Abhängigkeit der Dimension der gefertigten Produkteinheiten angepasst werden beziehungsweise ausgewechselt werden. Die Fördereinheit 3 übernimmt die Produkteinheiten 1 von der Produktionslinie 2 und führt sie über verschiedene Umlenkrollen 6, 6' und einer getriebenen Förderrolle 7 in jenen Bereich, in dem die Produkteinheiten 1 auf ein Transportband 8 in Produktaufnahmen 9 übergeben werden. Die Fördereinheit 3 läuft genau wie die Produktionslinie 2 mit einer kontinuierlichen Geschwindigkeit. Weil die Distanz zwischen den Produkteinheiten 1 auf dem Band der Produktionslinie 2 oft kleiner ist als die Distanz zwischen zwei einanaer folgenden Fördergondeln 4, ist die lineare Bewegungsgeschwindigkeit der Transportkette 5 zwangsläufig höher als die lineare Fortbewegungsgeschwindigkeit des Bandes der Produktionslinie 2.

Die Fördergondeln 4 werden mittels einem Umlenkblech 13 vom Band der Produktionslinie 2 zu den Fördergondeln 4 der Fördereinheit 3 bewegt. Die genaue Übernahme der Produkteinheiten 1 in diesen Bereich ist nicht Gegenstand der Erfindung und wird hier nicht genauer erläutert. Solche Lösungen sind jedoch aus ähnlichen Anlagen wie beispielsweise der US-A-5339606 bekannt.

Die gefüllten Gondeln 4 werden über die Förderrolle 7 einer Umlenkrolle 6 und einer zweiten Umlenkrolle 6' in den Bereich einer Übergabestrecke 10 gefördert. Im Bereich der Umlenkrolle 6' werden die ankommenden Fördergondeln 4 mittels einem Führungsblech 16 in eine gekippte Position gebracht. Dabei kommt der Inhalt, nämlich die Produktionseinheit 1, auf eine variable Ablagefläche 20 zu liegen. Auf dieser variablen Ablagefläche 20 wird die Produkteinheit 1 bis zum vorderen Ende mit der Geschwindigkeit der Transportkette 5 weitergefördert. Am Ende der variablen Ablagefläche fällt die Produkteinheit 1 in eine leere Produktaufnahme 9 des Transportbandes 8. Die Fördergondel 4 kann nun unter Einwirkung der Schwerkraft in ihre normale Förderlage zurückschwenken. Die Fördergondeln 4 laufen nun im leeren Zustand über verschiedene Umlenkrollen 6 wieder zurück zum Übernahmebereich bei der Produktionslinie 2, um wieder befüllt zu werden.

Bevor die Funktionsfolge die zur Bildung der Produktegruppen 15 folgt beschrieben wird, wird vorerst auf die möglichen Ausgestaltungsformen der variablen Ablagefläche 20 eingegangen. Die variable Ablagefläche 20 ist in Bezug auf ihre zur Ablage zur Verfügung stehenden Länge variabel. Dies kann auf verschiedene Weisen erfolgen. Wesentlich ist, dass die variable Ablagefläche 20 in jenem Bereich angeordnet ist, in dem eine Strecke der Fördereinheit 3 und das Transportband 8, auf dem die Produktaufnahmen 9 zur Gruppenbildung angeordnet sind, parallel laufen. Dieser Bereich, in dem diese beiden Bänder parallel laufen, wird hier als Übergabestrecke 10 bezeichnet. Die Länge der Übergabestrecke 10 muss mindestens die Länge aufweisen, die die maximale zu erzeugende Produktegruppe auf dem Förderband 8 ausmacht.

Selbstverständlich ist die Übergabestrecke 10 somit gleich der minimalen Länge der variablen Ablagefläche 20. Die variable Ablagefläche 20 kann starr oder flexibel gestaltet sein. Gestaltet man die variable Ablagefläche 20 beispielsweise als ein starres Blech, so muss dieses Blech mindestens so lang wie die Übergabestrecke 10 sein, und es muss genügend Platz vorhanden sein, dass dieses Blech aus dem Bereich der Übergabestrecke herausfahren kann. Dies ist nur gegeben, wenn zwischen dem Ende der Übergabestrecke 10 und der Umlenkrolle, die zur Übergabestrecke 10 hinführt, genügend Platz vorhanden ist. Da dies jedoch häufig nicht der Fall ist, arbeitet man vorzugsweise mit einer Ablagefläche, die aus einem flexiblen Bandabschnitt gefertigt ist. Damit auf diesem flexiblen Bandabschnitt die Produkteinheiten korrekt abrollen können, ist es erforderlich, den flexiblen Bandabschnitt unter Spannung zu halten. Diese Spannung kann erzeugt werden durch ein am freien Ende des flexiblen Band angeordneten Gewichtes 26 oder die Walze 25 kann eine unter Federkraft stehende Aufwickelwalze 25 sein. Die Walze 25 ist selbstverständlich im Falle dass die Spannung mittels einem Gewicht 26 erzeugt wird, als einfache Umlenkwalze gestaltet.

Die variable Ablagefläche 20 wird aktiv bewegt. Hierzu dient ein beweglicher Mitnehmer 21, der in Förderrichtung am vorderen Ende der Ablagefläche 20 angreift. Der Mitnehmer 21 kann beispielsweise an einem Wagen 23 befestigt sein und der Wagen 23 in einer Schiene 22 laufen. Der Wagen 23 lässt sich beispielsweise mittels einem Zahnriemen bewegen. Hierzu ist ein Fördermittel 24 symbolisch dargestellt. Das Fördermittel 24 kann beispielsweise ein Schrittmotor sein. Natürlich kann der bewegliche Mitnehmer auch auf andere Weisen linear bewegt werden. Sowohl hydraulische als auch pneumatische Mittel kommen neben der beschriebenen elektromotorischen Betätigung in Frage. Selbstverständlich kommen neben den beschriebenen Lösungen weitere Varianten in Frage. Ganz generell wird man vorzugsweise am hinteren Ende des flexiblen Bandabschnittes eine Zugvorrichtung angreifen lassen. Die bereits beschriebenen Lösungen, nämlich mittels einer Aufwickelwalze 25 beziehungsweise mittels einem angreifenden Gewicht 26, sind die beiden sinnvollsten Lösungen.

Die grössenvariable Ablagefläche kann selbstverständlich auch aus zwei oder mehr teleskopisch ineinander und auseinander schiebbaren Platten gebildet werden. Auf diese Weise ist ebenfalls der Platzbedarf relativ gering. Solche ein- und ausschiebbaren Platten als grössenvariable Ablageflächen lassen sich auch wieder hydraulisch, pneumatisch oder elektromechanisch verschieben.

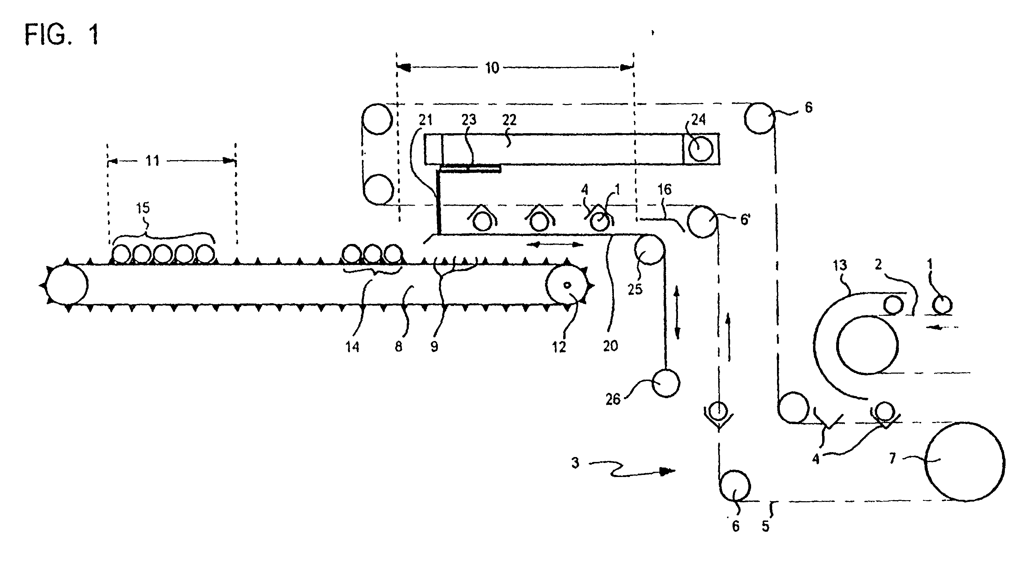

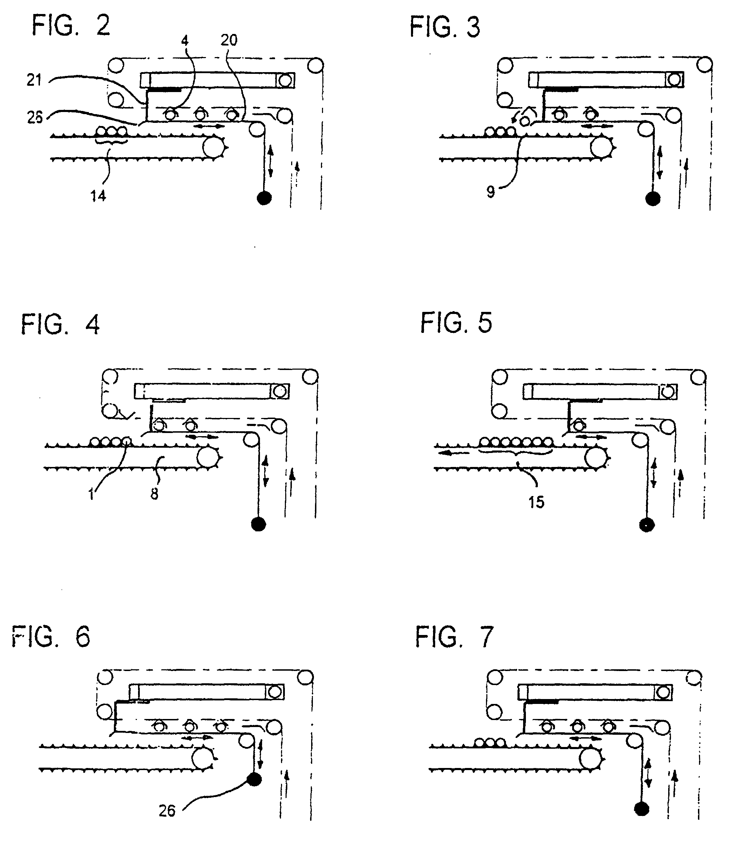

In den Figuren 2 bis 7 sind die verschiedenen Positionen in Ablaufreihenfolge dargestellt. In der Figur 2 ist die Position wie in der Gesamtansicht nach Figur 1 dargestellt gezeigt. Mit 14 ist eine sich bildende Produktegruppe 14 erkennbar. Diese besteht im Moment aus drei Einheiten. Der Mitnehmer 21 hat eine Abrollkante 28, die sich in diesem Moment praktisch bei der zuletzt abgelegten Produkteeinheit befindet. Die auf der variablen Ablagefläche 20 innerhalb der Fördergondel 4 gelegene Produkteeinheit ist bereits bis zur Abgabeposition vorbewegt. In der nächsten Position gemäss der Figur 3 ist der Mitnehmer 21 ruckartig um die Distanz einer Produktaufnahme 9 nach rechts verschoben. Im folgenden Moment wird die nun nicht mehr gestützte Produkteinheit 1 über die Abrollkante 28 in die anschliessende freie Produktaufnahme 9 rollen. Die leere Fördergondel 4 schwenkt sich nun automatisch wieder zurück in die normale Aufnahmeposition. In der Figur 4 erkennt man die neu bereits abgelegte weitere Produkteinheit 1, und die nachfolgende wieder gefüllte Fördergondel 4 ist in der Zwischenzeit wieder so weit nach vorne gefördert, dass diese wiederum in der Abgabeposition wie in Figur 2 sich befindet.

Diese schrittweise Abgabe, während das Transportband 8 stillsteht, erfolgt solange, bis eine Produktgruppe 15 der gewünschten Länge gebildet ist. Diese Situation ist in Figur 5 dargestellt. Im nächsten Moment wird das Transportband 8 die Produktgruppe 15 in die in Figur 1 ersichtliche Abschiebeposition 11 fördern. Die Fördergeschwindigkeit des Transportbandes 8 ist dabei erheblich höher als die Transportgeschwindigkeit der Transportkette 5 der Fördereinheit 3.

Sobald sich die Produktegruppe in der Abschiebeposition 11 befindet, hält das Transportband 8 an und verbleibt in dieser Position während eine nächste Produktegruppe zusammengestellt wird. Die Zeit, um die Produktegruppe im Bereich der Abschiebeposition auf eine Abbindemaschine zu übergeben, ist auf jeden Fall kürzer als die Zeit, die für die Wiederbildung einer neuen Produktegruppe und sei es auch eine kürzere, erforderlich ist. Vom Moment weg, an dem das Transportband 8 die Produktegruppe in die Abschiebeposition überführt, läuft auch der Mitnehmer 21 in die vorderste Abgabeposition, wie sie in Figur 6 gezeigt ist. In dieser Position befindet sich das Gewicht 26 in seiner obersten Lage. Der Mitnehmer 21 läuft gleich oder geringfügig schneller als die Transportkette 5 mit den Fördergondeln 4 in die Ausgangsposition nach vorne, wie dies in der Figur 6 dargestellt ist. Nun beginnt ein neuer Zyklus, der in Figur 7 vollendet dargestellt ist, da nun die selbe Situation wie in Figur 2 erreicht ist.

Es ist leicht erkennbar, dass bei Wechsel der Produkteinheiten lediglich das Transportband 8 mit den Produktaufnahmen 9 ausgewechselt werden muss. Weitere Anpassungen sind nicht erforderlich. Im Vergleich zu allen bisher bekannten Vorrichtungen ist die hier aufgezeigte Lösung steuertechnisch mit dem geringsten Aufwand zu realisieren und die hierzu erforderlichen Mittel sind preiswert. Natürlich lassen sich auch die etwas teureren Varianten realisieren, die vom gleichen Erfindungsgedanken ausgehen.

## Patentansprüche

1. Vorrichtung zur Uebernahme von länglichen, mindestens annähernd zylindrischen Produkteinheiten (1), vorzugsweise Tuben, Hülsen oder Dosen, die kontinuierlich von einer Produktionslinie (2) kommen, und zur Bildung von Produktegruppen (15) mit einer vorwählbaren Einheiten-Anzahl, die eine kontinuierlich anliefernde Fördereinheit (3) und ein die Produktegruppen aufnehmendes und in eine Abschiebeposition förderndes Transportband (8) mit Produktaufnahmen (9) umfasst, wobei die Fördereinheit (3) und das Transportband (8) eine gemeinsame Uebergabestrecke (10) aufweisen, in der sie distanziert parallel zueinander verlaufen, **dadurch gekennzeichnet, dass** im Bereich der Uebergabestrecke (10) eine grössenvariable Ablagefläche (20) zwischen der Fördereinheit (3) und dem Transportband (8) angeordnet ist, die nach Massgabe der zu bildenden Produktegruppen (15) bewegbar ist.

2. Vorrichtung nach Anspruch 1, **dadurch gekennzeichnet, dass** die grössenvariable Ablagefläche (20) ein flexibler Bandabschnitt ist, der unter Spannung (26) gehalten ist.

3. Vorrichtung nach Anspruch 2, **dadurch gekennzeichnet, dass** der flexible Bandabschnitt an dem in Förderrichtung vorderen Ende einen linear beweglichen Mitnehmer (21) angreift.

4. Vorrichtung nach Anspruch 3, **dadurch gekennzeichnet, dass** der linear bewegliche Mitnehmer (21) hydraulisch, pneumatisch oder elektromotorisch betätigbar ist.

5. Vorrichtung nach Anspruch 2, **dadurch gekennzeichnet, dass** an dem in Förderrichtung hinteren Ende des flexiblen Bandabschnittes (20) eine Zugvorrichtung angreift.

6. Vorrichtung nach Anspruch 5, **dadurch gekennzeichnet, dass** die Zugvorrichtung eine Aufwickelwalze (25) ist, auf die das hintere Ende des flexiblen Bandabschnittes (20) aufwickelbar ist.

7. Vorrichtung nach Anspruch 5, **dadurch gekennzeichnet, dass** der flexible Bandabschnitt (20) über eine Umlenkwalze (25) geführt ist und am hinteren Ende ein Gewicht (26) angreift, welches den flexiblen Bandabschnitt (20) unter Einwirkung der Gravitation unter Zugspannung hält.

8. Vorrichtung nach Anspruch 1, **dadurch gekennzeichnet, dass** die grössenvariable Ablagefläche (20) durch eine feststehende und eine unter diese ein- und ausschiebbare Platte gebildet ist.

9. Vorrichtung nach Anspruch 8, **dadurch gekennzeichnet, dass** die ein- und ausschiebbare Platte hydraulisch, pneumatisch oder elektromechanisch verschiebbar ist.

## Claims

1. A device for taking over elongate, at least approximately cylindrical product units (1), preferably tubes, sleeves or cans which continuously arrive from a production line (2), and for forming product groups (15) with a preselectable unit number which comprises a continuously delivering conveyor unit (3) and a transport belt (8) with product receptacles (9) which accommodates the product groups and conveys these into a push-off position, wherein the conveyor unit (3) and the transport belt (8) have a common transfer path (10) in which they run parallel to one another at a distance, **characterised in that** in the region of the transfer path (10) a rest surface (20) variable in size is arranged between the conveyor unit (10) and the transport belt (8), which is movable in accordance with the product groups (15) to be formed.

2. A device according to claim 1, **characterised in that** the rest surface (20) variable in size is a flexible belt section which is held under tension (26).

3. A device according to claim 2, **characterised in that** a linearly movable arm (21) engages on that end the flexible belt section which is at the front in the conveying direction.

4. A device according to claim 3, **characterised in that** the linearly movable arm (21) is hydraulically, pneumatically or electromotorically actuatable.

5. A device according to claim 2, **characterised in that** a tension device engages on that end of the flexible belt section (20) which is at the rear in the conveying direction.

6. A device according to claim 5, **characterised in that** the tension device is a winding-on roller (25) onto which the rear end of the flexible belt section (20) may be wound.

7. A device according to claim 5, **characterised in that** the flexible belt section (20) is led via a deflection roller (25) and on the rear end there engages a weight (26) which maintains the flexible belt section (20) under tensile stress under the effect of gravity.

8. A device according to claim 1, **characterised in that** the rest surface (20) variable in size is formed by a stationary plate and one which may be pushed into and out of this.

9. A device according to claim 8, **characterised in that** the plate which may be pushed in and out is hydraulically, pneumatically or electromechanically displaceable.

## Revendications

1. Dispositif destiné à recevoir des articles allongés, au moins approximativement cylindriques (1), de préférence des tubes, des étuis ou des boîtes en fer-blanc, qui arrivent en continu depuis une chaîne de production (2), et à former des groupes d'articles (15) avec un nombre d'unités pouvant être prédéfini, qui comprend une unité de transport (3) amenant les articles en continu et un convoyeur à bande (8) avec des compartiments (9) recevant les groupes d'articles et les mettant dans une position d'enlèvement, sachant que l'unité de transport (3) et le convoyeur à bande (8) présentent un tronçon de transfert commun (10) sur lequel ils s'étendent parallèlement entre eux de façon espacée, **caractérisé en ce qu'**une surface de dépôt (20) de dimension variable se situe dans la zone du tronçon de transfert (10), entre l'unité de transport (3) et le convoyeur à bande (8), qui peut être configurée en fonction du nombre de groupes d'articles (15) à former.

2. Dispositif selon la revendication 1, **caractérisé en ce que** la surface de dépôt de dimension variable (20) est un segment de bande flexible qui est maintenu sous tension (26).

3. Dispositif selon la revendication 2, **caractérisé en ce qu'**un toc d'entraînement (21) mobile de façon linéaire est en prise avec l'extrémité du segment de bande flexible qui se trouve à l'avant par rapport au sens d'avancement.

4. Dispositif selon la revendications 3, **caractérisé en ce que** le toc d'entraînement (21) mobile de façon linéaire peut être actionné par un système hydraulique, pneumatique ou par un moteur électrique.

5. Dispositif selon la revendication 2, **caractérisé en ce qu'**un dispositif de traction est en prise avec l'extrémité arrière du segment de bande flexible (20) qui se trouve à l'arrière par rapport au sens d'avancement.

6. Dispositif selon la revendication 5, **caractérisé en ce que** le dispositif de traction (25) est un cylindre enrouleur sur laquelle l'extrémité arrière du segment de bande flexible (20) peut être enroulée.

7. Dispositif selon la revendication 5, **caractérisé en ce que** le segment de bande flexible (20) passe sur un cylindre de renvoi (25) et **en ce qu'**un poids (26) agit sur l'extrémité arrière, qui maintient le segment de bande flexible (20) sous tension par traction, sous l'effet de la gravité.

8. Dispositif selon la revendication 1, **caractérisé en ce que** la surface de dépôt de dimension variable (20) est constituée par un plateau fixe et par un second plateau gigogne.

9. Dispositif selon la revendication 8, **caractérisé en ce que** le plateau gigogne peut être déplacé par un système hydraulique, pneumatique ou électromécanique.
